# EUROPEAN PATENT APPLICATION

(11) **EP 2 169 809 A1**
(43) Date of publication of application: **31.03.2010**
(21) Application number: 08425640.3
(22) Date of filing: 30.09.2008
(51) Int. Cl.: H02K 3/493

(54) **A ferromagnetic wedge for closing slots of a rotating electric machine and a machine structure which incorporates the wedge**

(71) Applicant: Ansaldo Sistemi Industriali S.p.A., 20126 Milano MI (IT)
(72) Inventor: Luise, Fabio, 30174 Zelarino (VE) (IT); Visintin, Massimiliano, 34100 Trieste (IT)
(74) Representative: Bonvicini, Davide

(57) **Abstract**

A magnetic wedge for closing slots of a rotating electric machine comprising two elements that are distinct and produced separately: a first element (1) in the shape of an elongated plate made of sintered material having high magnetic permeability and a second mechanical slot closure element (2) made of mould-formed plastics material such as epoxy or polyester resin loaded with glass fibre and having properties of high mechanical strength against stresses.

## Description

The present invention relates to an improved ferromagnetic wedge for closing stator and/or rotor slots of a rotating electric machine, and the resulting machine structure.

In rotating electric machines of a certain power, the electrical windings, generally of the distributed type, are kept inside slots formed in the stator and/or rotor by means of wedges, also known as "top sticks".

These wedges can be both non-magnetic and magnetic.

In the former case, they are made of polymer compounds, such as epoxy or polyester resins, suitably loaded with glass fibres, while ferromagnetic wedges are obtained by dispersing iron oxides in epoxy resin or by the sintering of ferromagnetic material (iron oxides) in organic binders.

In both cases, since the wedges are exposed to variable magnetic fluxes, they must be made of materials having high electrical resistivity, in order to keep the induced eddy currents as low as possible, or to have a structure which achieves the same effect.

Furthermore, the wedges must have sufficient mechanical strength to withstand stresses induced by the electromagnetic and thermal fields and, in the case of rotors, stresses induced by the centrifugal force.

The advantages resulting from the use of magnetic wedges (i.e. those having high magnetic permeability) in terms of limiting additional losses and reducing dispersed fluxes have been known for long time, but to meet the requirement of high magnetic permeability together with adequate mechanical strength combined with high electrical resistivity, the solutions developed have, until now, been unsatisfactory, limited in performance, and laborious and expensive to produce.

Magnetic wedges that have the best magnetic properties combined with high resistivity can be obtained by sintering of oxides of metals (Fe, Ni, Mn) as described for example in EP 052 878.

Unfortunately, in spite of good magnetic performance, these sintered wedges are of limited reliability due to their fragility: they run the risk of breakage when they are being assembled and then through ageing due to combined the mechanical and thermal stresses.

As an alternative, magnetic wedges obtained by loading a plastics matrix (epoxy resins and similar) with iron oxides are used.

The magnetic permeability of these wedges is much lower than that of sintered wedges but on the other hand these components are not fragile and therefore are mechanically more reliable.

To best meet the requirements of mechanical strength and high magnetic permeability, composite wedges have also been proposed in which a core with relatively high magnetic permeability is encapsulated in (or integrally coupled with) a mechanical strengthening element which lacks or has very modest magnetic properties.

Examples of composite wedges are proposed in the document US 6,683,398 and a detailed description of the reasons suggesting the use of composite wedges (with a first portion that performs only a mechanical function and a second portion with magnetic functions) is given by US 2,201,699.

However, the integration of both functions into a single element involves constructional solutions that are generally complex and expensive, and due to compatibility reasons limitations are imposed on the use of materials and production technologies.

The present invention overcomes these limitations with a wedge structure formed by two or more elements or independent layers: the various possible configurations of the system have in common a first layer made of a loaded, mechanically strong, compound (epoxy resin, polyester resin or similar) which appears at the airgap and a second layer, arranged between the first layer and the winding housed in the slot, which is made of sintered magnetic material.

The overall compactness of the system is provided by the vacuum impregnation of the windings arranged in the slots and of the entire stator by means of a process that is known per se and which structurally strengthens the wedges anchoring them firmly in the slots.

However, to simplify the insertion of the wedges in the slots, the magnetic element of the wedges can preliminarily be fixed to the mechanical element with biadhesive tape.

The features and advantages of the invention, as characterized by the claims, will become clearer from the following description given with reference to the appended drawings in which:
- Figure 1 is a perspective view of a preferred wedge shape produced in accordance with the present invention;
- Figure 2 is a front view of a variant embodiment of a component of the wedge of Figure 1;
- Figure 3 is a partial cross-sectional view of the structure of a rotating electric machine in which the slots are closed by a wedge such as the one shown in Figure 1, in the variant of Figure 2;
- Figure 4 is a partial cross-sectional view of the structure of Figure 3 in which an auxiliary element of the wedge is provided;
- Figure 5 is a partial cross-sectional view of the structure of Figure 4 in which another auxiliary element is provided;
- Figure 6 is a partial cross-sectional view of a variant embodiment of the structure of Figure 5;
- Figure 7 is a partial cross-sectional view of a first variant embodiment of the structure of Figure 3;
- Figure 8 is a partial cross-sectional view of a second variant embodiment of the structure of Figure 3.

In the various drawings, functionally equivalent parts are indicated with the same reference number.

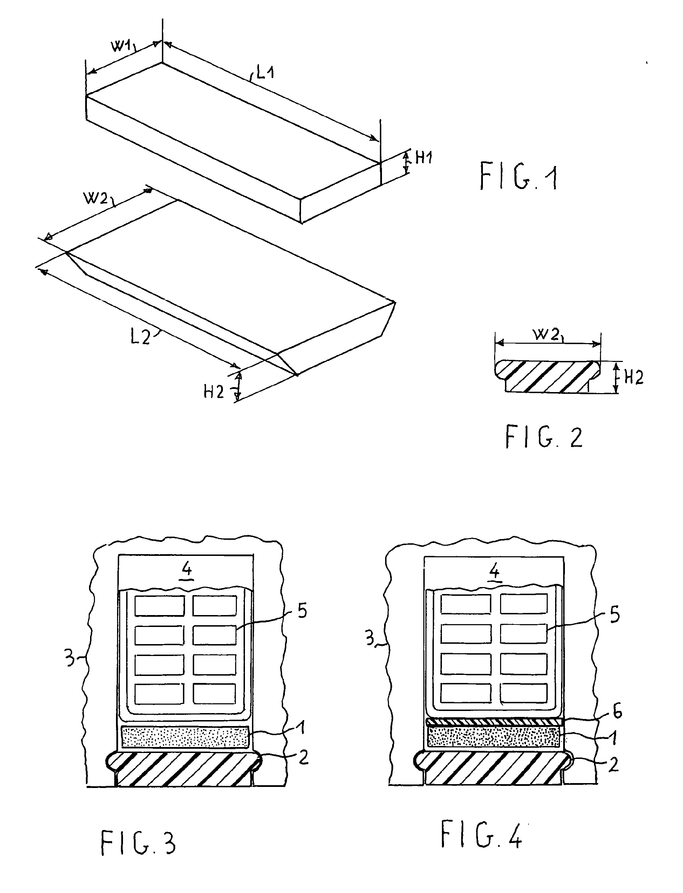

With reference to Figure 1, the wedge according to the invention comprises the first element 1 in the shape of a rectangular parallelepiped, with a height H1, a width W1 proportionate with the dimensions of the slots in which the element must be inserted and a length L1 which can be equal to the thickness of the stator or rotor package forming the slots, or a fraction of the same in which case several elements 1 are arranged in the slots in series, juxtaposed one in front of the other in the length direction.

The element 1 is suitably formed by the sintering of material having high magnetic permeability, such as for example iron oxide.

A second component of the wedge is formed by a element 2, in the shape of an elongated bar, with a cross-section shaped according to the cross-section of the slots in which the element must be inserted.

In general, the cross-section is in the shape of an isosceles trapezium, as depicted precisely in Figure 1, but according to other trends, the sides of the slots can have a semicircular groove, and therefore the sides of the element 2 can have rounded shoulders which protrude from a rectangular cross-section, as shown in Figure 2.

It is clear that the width W2 and the height H2 of the element 2 are imposed by the dimensions of the slot in which the element must be inserted.

Even in that case the length L2 can be equal to the length of the slots, and preferably this is the case, or it can be a fraction of the same.

The element 2 is suitably mould-formed with a loaded resinous compound, for example epoxy or polyester resin loaded with glass fibre.

These materials provide excellent mechanical strength combined with high electrical resistivity.

It is to be noted that the production processes for the two components, which are produced separately, are completely independent from one another, so that the properties of magnetic permeability of one and mechanical strength of the other can be enhanced without conditions of compromise and meeting production requirements.

It is also to be noted that the mould-forming process for the element 2 provides for loading in some measure, if necessary, the resin used to mould it with ferromagnetic material in powder or granule form without compromising its mechanical strength, so as to obtain a product with a certain permeability which contributes in some measure to the magnetic properties of the wedge.

Figure 3 shows in partial cross-sectional view and in its main aspects the structure of a rotating electric machine in which the stator (or rotor) slots are closed by a wedge such as the one described.

References 1, 2, 3, 4 and 5 indicate, respectively, the magnetic element 1 of the closure wedge, the mechanical element 2 of the slot closure wedge, and the stator or rotor package 3 of sheets forming the slot 4.

Lastly, the reference 5 indicates the winding arranged in the slot.

There will now be described the stages for setting up the structure.

For example, it is possible to insert, even by force, at one end of the slot the element 2 (or the series of elements 2) into its seat.

Next, the magnetic element 1 (or series of magnetic elements) is inserted into the slot, with a certain amount of play and therefore without force, and placed between the winding 5 and the mechanical element 2.

The vacuum impregnation of the unit, carried out in a known way, ensures the compactness of the structure and firmly anchors the mechanical element 2 and the magnetic element 1 to each other, to the stator (or rotor) package and to the winding 5.

Figure 4 shows a possible variant setup.

In this case there is arranged between the magnetic element 1 and the winding 5 a biadhesive tape, and the magnetic element 1 (or series of magnetic elements) is preliminarily arranged in the slot, through its opening (an operation which is possible only in the case of open slots) where it is kept in position, in contact with the winding 5, by the biadhesive tape.

Next, the slot is closed by introducing at one of its ends the mechanical element 2, and the whole arrangement is subjected to the usual vacuum impregnation treatment.

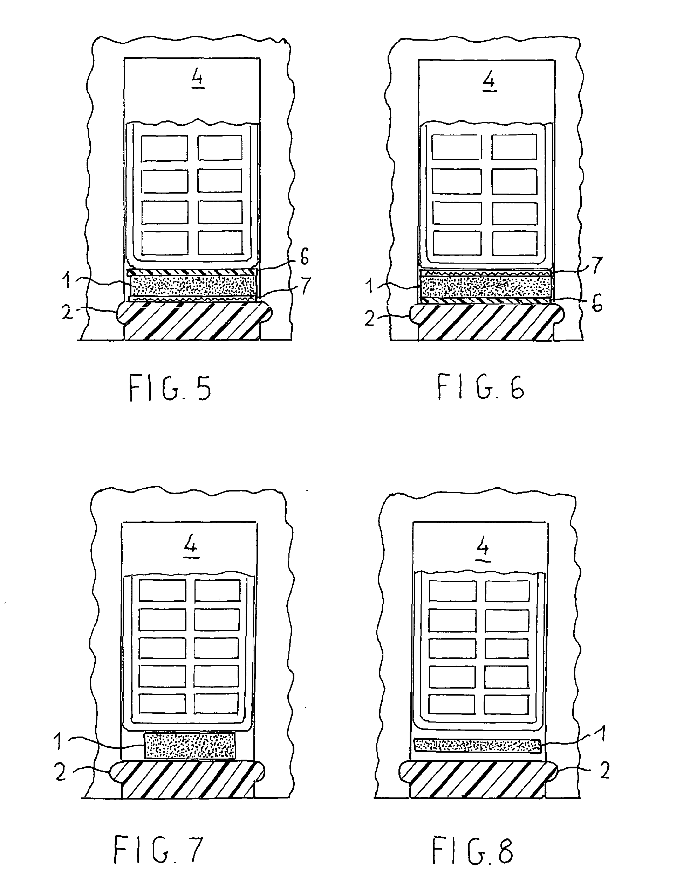

Figure 5 shows another possible variant setup which differs from that of Figure 4 only in that in between the magnetic element 1 and the mechanical element 2 of the wedge, there is a soft and porous fabric or felt layer 7, preferably fixed with adhesive to the element 2 or to the magnetic element 1 prior to inserting the mechanical element 2 into the slot.

The purpose of this layer is to prevent direct contact between the element 1 and the element 2, as well as reducing the free volume which must be filled by the impregnation material.

However preferable the shapes described for the setup may be, it is also possible to exchange the roles of the biadhesive tape 6 and the porous fabric 7, as shown in Figure 6.

In that case the magnetic element 1 is preliminarily fixed with the biadhesive tape 6 to the mechanical element 2 and the porous fabric layer 7, fixed to the element 1 or to the winding 5, prevents direct contact between the element 1 and the winding 5 when the wedge is being introduced in the slot.

In the above description and in the associated drawings, the width W1 of the magnetic element 1 is substantially equal to the breadth of the slots and its thickness H1 is substantially equal to the space available between the mechanical element 2 and the winding.

It is nevertheless clear, as shown in Figures 7 and 8 that the dimensions of width W1 and thickness H1 of the magnetic element 1 can be lower (either or both).

Thus not only is the use of sintered material reduced, but it is also possible to control and limit the phase inductance, containing it within appropriate values.

The free volume can be filled with non-magnetic material of high electrical resistivity or left empty for successive filling with the resin used for the vacuum impregnation.

## Claims

1. A magnetic wedge for closing slots of a rotating electric machine, **characterized in that** it comprises two independent elements:
- a first element (1) in the shape of a rectangular parallelepiped made of sintered material having high magnetic permeability and
- a second mechanical slot closure element (2) made of mould-formed plastics material, such as epoxy or polyester resin, loaded with glass fibre and having properties of high mechanical strength against stresses.

2. A wedge according to Claim 1, in which the second element is loaded with powder or granules of ferromagnetic material.

3. A wedge according to either Claim 1 or Claim 2, in which the first and second elements are coupled with each other using biadhesive tape (6).

4. A wedge according to either Claim 1 or Claim 2, in which there is placed between the elements an impregnable porous fabric (7).

5. A structure of a rotating electric machine with a stator or rotor package (3) provided with slots (4), which structure is **characterized in that** the slots (4) are closed in an orderly manner from the inside to the airgap by a first element (1) in the shape of a rectangular parallelepiped made of sintered material having high magnetic permeability and by a second element (2) placed above the first element and made of plastics material, such as epoxy or polyester resin, loaded with glass fibre and having properties of high mechanical strength against stresses, both the elements (1, 2) being firmly fixed to the structure (3) of the machine by means of the vacuum impregnation process with which the windings (5) of the machine are fixed in the slots (4).

6. A structure according to Claim 5, in which the second element (2) is loaded with powder of ferromagnetic material.

7. A structure according to either Claim 5 or Claim 6, in which the first (1) and second (2) elements are coupled with each other using biadhesive tape.

8. A structure according to any one of Claims 5 to 7, in which there is placed between the first element (1) and the winding (5) inside the slot an impregnable porous fabric or felt tape (7).

9. A structure according to either Claim 5 or Claim 6, in which the first element (1) is fixed with biadhesive tape (6) inside the slot (4).

10. A structure according to Claim 9, in which there is placed between the first element (1) and the winding (5) inside the slot an impregnable porous fabric or felt tape (7).

11. A structure according to any one of Claims 5 to 10, in which the first element (1) has a width W2 that is less than the width of the slot (4).
